# EUROPEAN PATENT SPECIFICATION

(11) **EP 3 128 346 B1**
(45) Date of publication and mention of the grant of the patent: **03.07.2019**
(21) Application number: 16182245.7
(22) Date of filing: 01.08.2016
(51) Int. Cl.: G01S 17/10, G01S 17/42, G01S 7/486, G01S 7/487, G01S 17/93

(54) **PULSED LIGHT DETECTOR, OBJECT DETECTOR, SENSOR, MOVABLE DEVICE, AND PULSED LIGHT DETECTING METHOD**
DETEKTOR VON GEPULSTEM LICHT, OBJEKTDETEKTOR, SENSOR; BEWEGLICHE VORRICHTUNG UND VERFAHREN ZUR DETEKTION VON GEPULSTEM LICHT
DÉTECTEUR DE LUMIÈRE PULSÉE, DÉTECTEUR D'OBJET, CAPTEUR, DISPOSITIF MOBILE ET PROCÉDÉ DE DÉTECTION DE LUMIÈRE PULSÉE

(30) Priority: 05.08.2015 JP 2015154761
(43) Date of publication of application: 08.02.2017
(73) Proprietor: Ricoh Company, Ltd., Tokyo 143-8555 (JP)
(72) Inventor: IMAI, Shigeaki, Tokyo 143-8555 (JP)
(74) Representative: J A Kemp

(56) References cited:
- EP-A2- 2 549 248
- DE-A1-102011 005 746
- DE-C1- 3 606 544
- US-A- 5 536 932
- US-A1- 2015 185 320
- CRISTIANO NICLASS ET AL: "A 100m-range 10-frame/s 340*96-pixel time-of-flight depth sensor in 0.18[mu]m CMOS", ESSCIRC (ESSCIRC), 2011 PROCEEDINGS OF THE, IEEE, 12 September 2011 (2011-09-12), pages 107-110, XP031976366, DOI: 10.1109/ESSCIRC.2011.6044926 ISBN: 978-1-4577-0703-2

## Description

### BACKGROUND

### Technical Field

The present disclosure generally relates to an object detector, a sensor, a movable device, and a method for detecting pulsed light. More specifically, the present disclosure relates to an object detector including a pulsed light detector to detect pulsed light emitted to and reflected from an object, a sensor including the object detector, a movable device including the sensor, and a method for detecting pulsed light projected onto and reflected from an object.

### Related Art

In recent years, developing devices for detecting pulsed light emitted to and reflected from an object is increasing (for example, refer to Japanese Laid-Open Patent Application No. 2011-128112, Japanese Laid-Open Patent Application No. 2009-063339, Japanese Laid-Open Patent Application No. 2012-107984, Japanese Laid-Open Patent Application No. 2009-069003, and Japanese Laid-Open Patent Application No. 1998-197620).

However, there is room for improvement in the accuracy of detection of pulsed light emitted to and reflected from an object in devices disclosed in Japanese Laid-Open Patent Application No. 2011-128112, Japanese Laid-Open Patent Application No. 2009-063339, Japanese Laid-Open Patent Application No. 2012-107984, Japanese Laid-Open Patent Application No. 2009-069003, and Japanese Laid-Open Patent Application No. 1998-197620.

Cristiano Niclass et al: "A lOOm-Range 10-Frame/s 340x96-Pixel Time-of-Flight Depth Sensor in 0.18µm CMOS", 2011 IEEE, pages 107-110, discloses a high-performance depth sensor in a 0.18 µm CMOS technology.

US 2015/185320 A1 discloses a laser radar device and an object detection method.

### SUMMARY

The invention is defined in the claims.

According to the present disclosure, the accuracy of detection of pulsed light projected onto and reflected from an object can be improved.

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is a schematic view of an object detector according to an embodiment of the present disclosure;
FIG. 2A is an illustration of a projection optical system and a synchronous system;
FIG. 2B is an illustration of a light-receiving optical system;
FIG. 2C is a schematic view of an optical path from a laser diode (LD) to a reflection mirror and another optical path from the reflection mirror to a time-measuring photo diode (PD);
FIG. 3 is a schematic view of a PD output detector according to an embodiment of the present disclosure;
FIG. 4A is an illustration of an emitted light pulse and a reflected light pulse;
FIG. 4B is an illustration of a binarized emitted light pulse and a binarized reflected light pulse;
FIG. 5 is an illustration of a synchronization signal and a LD drive signal;
FIG. 6 is an illustration of a time-of-flight (TOF) method;
FIG. 7A is an illustration of the waveform of a received-light signal with sunlight;
FIG. 7B is an illustration of the waveform of a received-light signal without sunlight;
FIG. 8A is an illustration of a light receiving element according to a comparative example;
FIG. 8B is an illustration of a light receiving element according to a first Example;
FIG. 8C is an illustration of a light receiving element according to a second Example;
FIG. 8D is an illustration of a light receiving element according to a third Example;
FIG. 9 is a circuit diagram of a pulsed light detection circuit;
FIG. 10 is a graph illustrating a voltage signal component of pulsed light extracted from one light receiving area according to a comparative example and a voltage signal component of pulsed light extracted from ten sub light receiving areas according to an embodiment of the present disclosure;
FIG. 11 is a schematic illustration of a sensor; and
FIG. 12 is an illustration of the pulsed light detection circuit of FIG. 9 with a light-receiving element array housed in a package.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

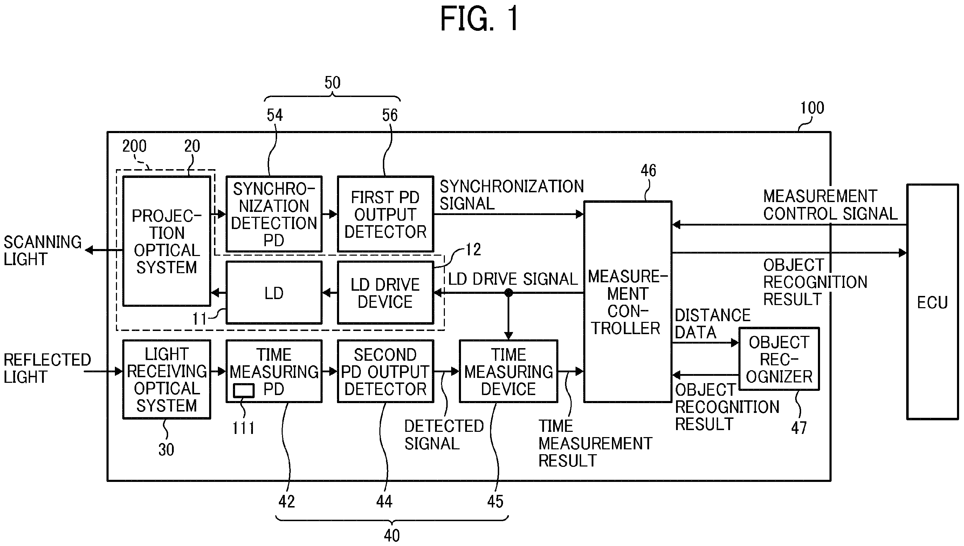

A description is provided of an object detector 100 according to one embodiment of the present disclosure referring to FIGS. 1 through 10.

FIG. 1 is a schematic view of a configuration of the object detector 100.

The object detector 100 is a scanning laser radar as an example, which is mounted on vehicle as a movable body 400. The scanning laser radar emits light to an object, such as a proceeding vehicle, a parked vehicle, an obstacle, or a pedestrian, and receives light reflected by the object to measure distance to the object. The object detector 100 is powered from a vehicle battery.

As illustrated in FIG. 1, the object detector 100 includes a laser diode (LD) as a light source 11, a LD drive device 12, a projection optical system 20, a light receiving optical system 30, a detection system 40, a synchronous system 50, a measurement controller 46, and an object recognizer 47.

The LD, which is also called an edge emitting laser, is driven by the LD drive device 12 to emit a laser beam. The LD drive device 12 causes the LD to emit a laser beam, using a LD drive signal, which is a rectangular pulse signal, output from the measurement controller 46. Examples of the LD drive device 12 include a capacitor connected to the LD to supply electric current to the LD, a transistor to switch conduction/ non-conduction between the capacitor and the LD, and a charger to charge the capacitor. The measurement controller 46 starts or stops the measurement in response to a measurement control signal from an engine control unit (ECU) on vehicle.

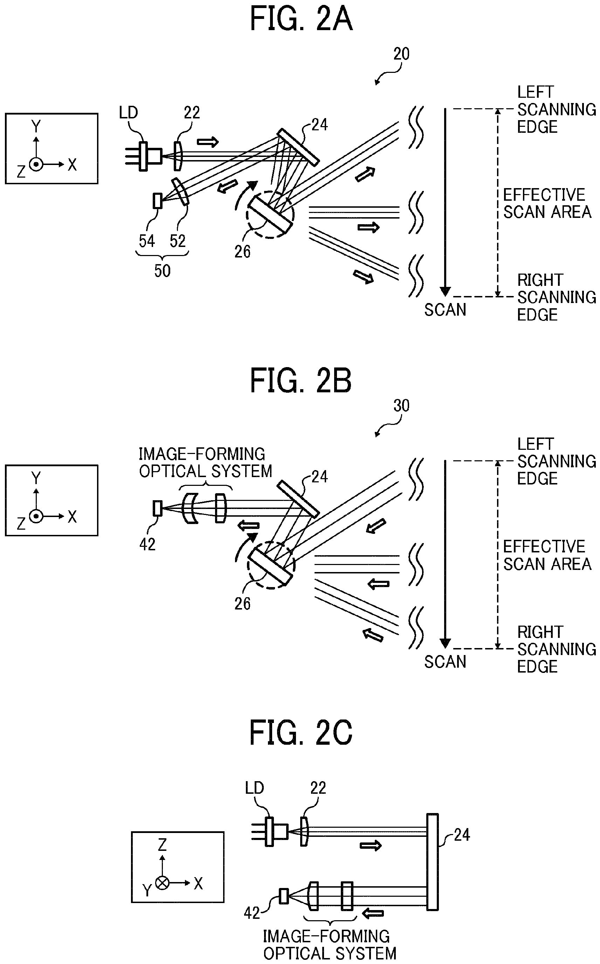

FIG. 2A schematically illustrates the projection optical system 20 and the synchronous system 50. FIG. 2B schematically illustrates the light receiving optical system 30. A description is provided below of the projection optical system 20, the synchronous system 50, and the light receiving optical system 30, using a three-dimensional rectangular coordinate system illustrated in FIGS. 2A, 2B, and 2C as appropriate, in which a vertical direction is a Z-axis direction.

The projection optical system 20 includes a coupling lens 22, a reflection mirror 24, and a rotating mirror 26 as a deflector. The coupling lens 22 is disposed on the optical path of light emitted from the LD. The reflection mirror 24 is disposed on the optical path of the light having passed through the coupling lens 22. The rotating mirror 26 is disposed on the optical path of the light reflected from the reflection mirror 24. In this case, the reflection mirror 24 is disposed on the optical path connecting between the coupling lens 22 and the rotating mirror 26, folding the optical path to reduce the size of the detector 100.

Through such optical path, the light emitted from the LD is shaped into a predetermined beam profile by the coupling lens 22, and the shaped light is then reflected from the reflection mirror 24. The rotating mirror 26 deflects the reflected light around the axis Z within a predetermined range of deflection.

The light deflected by the rotating mirror 26 corresponds to light projected by the projection optical system 20, which is light emitted from the object detector 100.

The rotating mirror 26 includes a plurality of reflection faces around the axis of rotation (axis Z), to reflect (deflect) the light reflected from the reflection mirror 24 while rotating around the axis of rotation, thereby causing the light to unidimensionally scan an effective scan area corresponding to the range of deflection in a horizontal one-axis direction (Y-axis direction). In this case, the range of deflection, i.e., the effective scan area lies on +X side. Hereinafter, the direction of rotation of the rotating mirror 26 is referred to as a "direction of rotation of mirror".

The rotating mirror 26 includes, as illustrated in FIG. 2A, two reflection faces opposed to each other. Alternatively, the configuration is not limited to this configuration, and the rotating mirror 26 includes one or more faces in some embodiments. Alternatively, in some embodiments, the rotating mirror 26 includes two reflection faces, which are tilted at different angles with respect to the axis of rotation (axis Z), to switch an area to be scanned and detected in Z-axis direction.

Thus, the LD, the LD drive device 12, and the projection optical system 20 constitute an optical scanning system 200 to cause light to optically scan the effective scan area.

The light receiving optical system 30 includes, as illustrated in FIG. 2B, the rotating mirror 26, the reflection mirror 24, and an image-forming optical system. The rotating mirror 26 reflects light projected from the projection optical system 20 and reflected (scattered) by an object disposed within an effective scan area. The reflection mirror 24 reflects the light reflected from the rotating mirror 26. The image-forming optical system forms an image of the light reflected from the reflection mirror 24 onto a time measuring PD 42.

FIG. 2C is an illustration of an optical path from the LD to the reflection mirror 24 and another optical path from the reflection mirror 24 to the time measuring PD 42.

As is clear from FIG. 2C, the projection optical system 20 and the light receiving optical system 30 overlap with each other in Z-axis direction. The rotating mirror 26 and the reflection mirror 24 are common between the projection optical system 20 and the light receiving optical system 30. Such a configuration reduces relative misalignment between the range of illumination of the LD and the range of light receivable by the time measuring PD 42 on an object, thus achieving stable detection of object.

As illustrated in FIGS. 1 and 2B, the detection system 40 includes a time measuring PD (photodiode) 42, a second PD output detector 44, and a time measuring device 45. The time measuring PD 42 receives, through the light receiving optical system 30, light projected from the projection optical system 20 and reflected by an object disposed within the effective scan area. The second PD output detector 44 detects a received light signal, which is a voltage signal in response to an output current (a current signal) from the time measuring PD 42. The time measuring device 45 measures a time difference between the timing of rising of a LD drive signal and the timing of detection of the received light signal of the second PD output detector 44.

The light projected from the projection optical system 20 and reflected (scattered) by an object proceeds, via the rotating mirror 26 and the reflection mirror 24, through the image-forming optical system, thereby collecting on the time measuring PD 42, referring to FIG. 2B. Still referring to FIG. 2B, the reflection mirror 24 is disposed between the rotating mirror 26 and the image-forming optical system, folding the optical path to reduce the size of the system. In this case, the image-forming system includes two lenses (image-forming lenses). However, in some embodiments, a configuration including three or more lenses is applicable. Alternatively, in some embodiments, a mirror optical system may be employed for the image-forming system.

As illustrated in FIGS. 1 and 2A, the synchronous system 50 includes a synchronization lens 52, a synchronization detection PD 54, and a first PD output detector 56. The synchronization lens 52 is disposed on an optical path of light. The light is emitted from the LD, advancing through the coupling lens 22. The light is then reflected from the reflection mirror 24, and deflected by the rotating mirror 26. The deflected light is reflected again from the reflection mirror 24. The synchronization detection PD 54 is disposed on the optical path of the light having passed through the synchronization lens 52. The PD output detector 56 detects a signal output from the synchronization detection PD 54.

Specifically, the reflection mirror 24 is disposed upstream from the range of deflection in the direction of rotation of the rotating mirror 26. The light, which has been deflected by the rotating mirror 26 toward the upstream from the range of deflection, enters the reflection mirror 24. The light deflected by the rotating mirror 26 and reflected from the reflection mirror 24 enters the synchronization detection PD 54 via the synchronization lens 52.

It is to be noted that the reflection mirror 24 is disposed downstream from the range of deflection in the direction of rotation of the rotating mirror 26 in some embodiments. Further, the synchronous system 50 may be disposed on the optical path of the light deflected by the rotating mirror 26 and reflected from the reflection mirror 24.

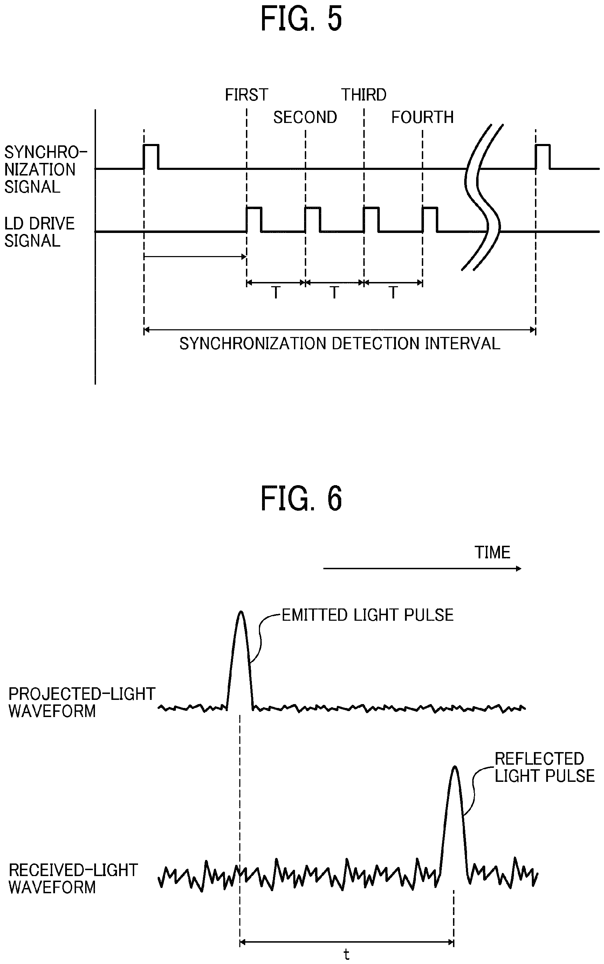

Rotation of the rotating mirror 26 causes the synchronization detection PD 54 to output a signal with every receipt of light reflected from the reflection face of the rotating mirror 26 on the synchronization detection PD 54. That is, the synchronization detection PD 54 periodically outputs a signal (synchronization signal) (refer to FIG. 5).

Emitting light for synchronization to irradiate the synchronization detection PD 54 with light from the rotating mirror 26 obtains the timing of rotation of the rotating mirror 26 from the timing of light receiving of the synchronization detection PD 54.

With an elapse of a predetermined length of time after the LD emits light for synchronization, the LD emitting pulsed light allows the effective scan area to be optically scanned. That is, the LD emits pulsed light during a period of time before and after the timing of illuminating the synchronization detection PD 54, thereby optically scanning the effective scan area.

In this case, examples of the time measuring device and optical detector include a photo diode (PD) as described above, an avalanche photo diode (APD), and a single photon avalanche diode (SPAD) as a Geiger mode APD. The APD and the SPAD have high sensitivity for the accuracy of detection and the detection of distance.

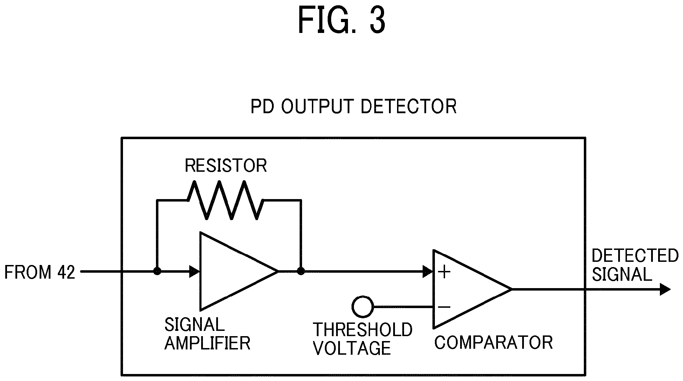

FIG. 3 is an illustration of the second PD output detector 44 at the detection system 40 and the synchronous system 50 according to an embodiment of the present disclosure. The second PD output detector 44 amplifies a received light signal (voltage signal), and detects the timing of receiving the received light signal. To amplify a received-light signal, the second PD output detector 44 converts a current output from the PD into a voltage, and amplifies the converted voltage, using a signal amplifier, such as an amplifier. To detect the timing of receiving the received-light signal, the second PD output detector 44 detects a rising waveform of the received-light signal of greater than or equal to a fixed output (threshold level), using a comparator. The second PD output detector 44 obtains a binarized received light signal as a logic signal, using a comparator.

The first PD output detector 56 detects the rising waveform of the received-light signal, outputting a synchronization signal, which is the binarized logic signal, to the measurement controller 46.

The measurement controller 46 generates a LD drive signal based on the synchronization signal from the PD output detector 56, and outputs the LD drive signal to the LD drive device 12 and the time measuring device 45.

That is, the LD drive signal is a delay pulsed light (periodic pulsed signal), which is emitted in a delayed manner relative to the synchronization signal (refer to FIG. 5).

The second PD output detector 44 detects the rising waveform of the received-light signal of the time measuring PD 42, and outputs the detected signal (rectangular pulsed signal) to the time measuring device 45.

The time measuring device 45 calculates a time difference between the timing of rising of the LD drive signal from the measurement controller 46 and the timing of rising of the detected signal sent from the PD output detector 44, outputting the calculated time difference as a time measurement result to the measurement controller 46.

The measurement controller 46 converts the measurement result from the time measuring device 45 into distance, calculating and outputting a back-and-forth distance as distance data to the object recognizer 47.

The object recognizer 47 recognizes the position of an object based on a plurality of sets of distance data obtained by one or more scans, outputting an object recognition result to the measurement controller 46. The measurement controller 46 transfers the object recognition result to the ECU.

The ECU performs, based on the transferred object recognizer, a steering control of a vehicle, such as auto-steering, and a speed control, such as autobrake.

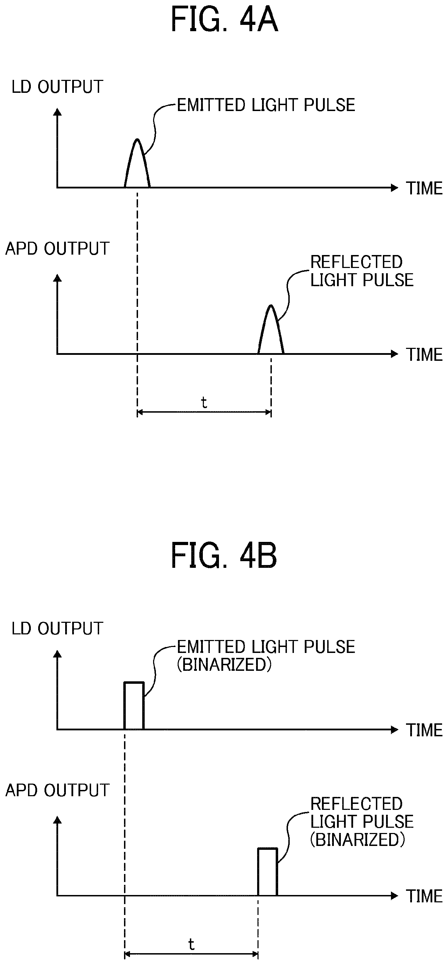

In this case, the LD drive device 12 drives the LD to emit pulsed light as illustrated in FIG. 4A (hereinafter, referred to as "emitted light pulse") while the rotating mirror 26 causes light to scan the effective scan area. Then, the time measuring PD 42 detects the pulsed light (hereinafter, referred to as "reflected light pulse") emitted from the LD and reflected (scattered) by an object. In FIG. 4A, instead of the PD, the APD is employed as an optical detector.

Measuring a time length t from when the LD emits the pulsed light to when the APD detects the reflected light pulse provides the distance to the object. Regarding measurement of a time length, as illustrated in FIG. 4B, the emitted light pulse is a rectangular pulse detected and binarized by the optical detector, such as the PD, and the reflected light pulse is a rectangular pulse binarized by the PD output detector 44. A time measuring circuit may measure a time difference t between the timing of rising of the rectangular pulse of the emitted light pulse and the timing of rising of the rectangular pulse of the reflected light pulse. Alternatively, the waveforms of the emitted light pulse and the reflected light pulse are subjected to an analog-to-digital (A/D) conversion to obtain digital data, measuring a time length (time difference) t by correlation calculation of the output signal of the LD and the output signal of the APD.

As described above, in the present embodiment, a Time Of Flight (TOF) is applied as a method for measuring time (refer to FIG. 6). That is, in the present embodiment, the LD as a light source 11 emits pulsed light. The pulse width of the emitted light ranges from several nanoseconds (ns) through several dozen ns. The projection optical system 20 projects the pulsed light. The emitted light having been reflected from and scattered on an object comes back and enters the time measuring PD 42 via the light receiving optical system 30. The PD output detector 44 converts the current output (current signal) from the time measuring PD 42 into a voltage through current-to-voltage (I/V) conversion, amplifying the converted voltage, thus obtaining the received-light waveform (received-light signal). With the received-light waveform having a voltage above a threshold value, the PD output detector 44 outputs a detected signal (refer to FIG. 3).

As illustrated in FIG. 6, a typical waveform of projected light (projected-light waveform) has a low noise. By contrast, light reflected from and scattered from an object typically has a low intensity, which is amplified by an amplifier, thereby increasing noise in the waveform of received light (received-light waveform).

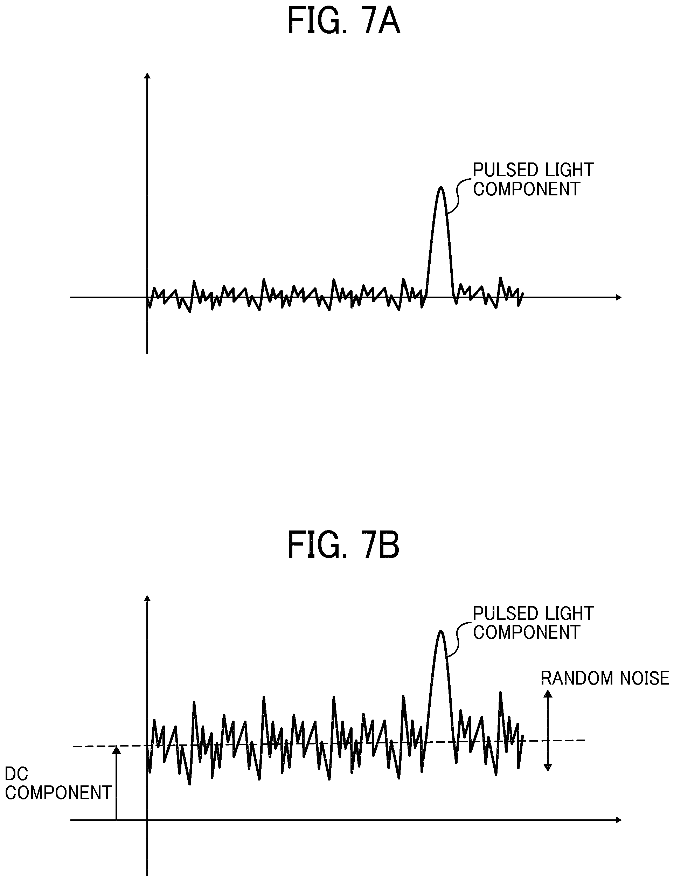

FIG. 7A is an illustration of the waveform of a received-light signal when sunlight enters the PD. FIG. 7B is an illustration of the waveform of a received-light signal when sunlight does not enter the PD.

As illustrated in FIGS. 7A and 7B, with sunlight entering the PD, a direct current (DC) component and random noise (shot noise) increase. Filters, such as high-pass filters, eliminate the DC component. However, the high-pass filter fails to eliminate the random noise.

Examples of method for eliminating random noise include subjecting a received-light waveform to the A/D conversion, using a fast Fourier transform. However, this method has difficulties in processing speed. Further, examples of method for eliminating random noise include reducing random noise, using a delay signal with a pulse waveform in a delay circuit. This method increases in size of circuit. For example, when a distance of 200 m is measured, delay time significantly increases to approximately 1.33 us. Further, the delay circuit, in general, is vulnerable to fluctuations in temperature, thus reducing the accuracy of circuit.

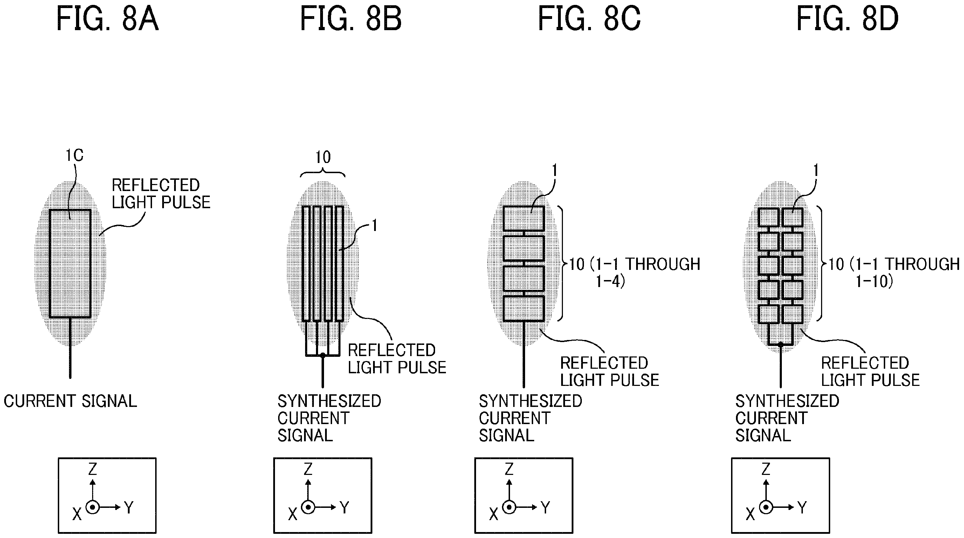

The inventor has found that, with the use of a light-receiving element array 10, in which a plurality of light receiving elements 1, such as a PD and an APD, are arranged, current signals from the respective light receiving elements 1 having received the reflected light pulses at substantially the same time are synthesized, thereby effectively reducing random noise, as illustrated in FIGS. 8B through 8D. This technical idea has been introduced into the object detector 100 according to the present disclosure as described below.

The random noise (shot noise), by its nature, changes in the amount of noise with the type of the light receiving element 1. By contrast, the reflected light pulse, which is signal light from an object, does not change with the type of the light receiving element 1. Accordingly, synthesizing currents (current signals) output from the plurality of light receiving elements 1 reduces random noise without reducing the intensity of the signal light.

Further, a consideration is given of dividing one large light receiving area (light receiving element 1) into four small sub light receiving areas (four small light receiving elements 1). As illustrated in 7B, the received light signal is a signal, in which the DC component and random noise generated due to sunlight, and pulsed light component (signal component of pulsed light) are superimposed on each other, in the object detector 100 that utilizes pulsed light under sunlight.

In this case, with a smaller light receiving area, a detection area is small, reducing both the sunlight component and the pulsed light component. However, there is no change in a signal-to-noise ratio (S/N ratio) as compared to the S/N ratio with a large light receiving area. With signals (current signals) output from a plurality of small sub light receiving areas synthesized while the DC component is cut by a high-pass filter 2, the pulsed light component increases by the number of the light receiving areas. However, even with the signals synthesized, random noise hardly increases because random noise in the signals has no correlations between the plurality of sub light receiving areas. Thus, the S/N ratios improves.

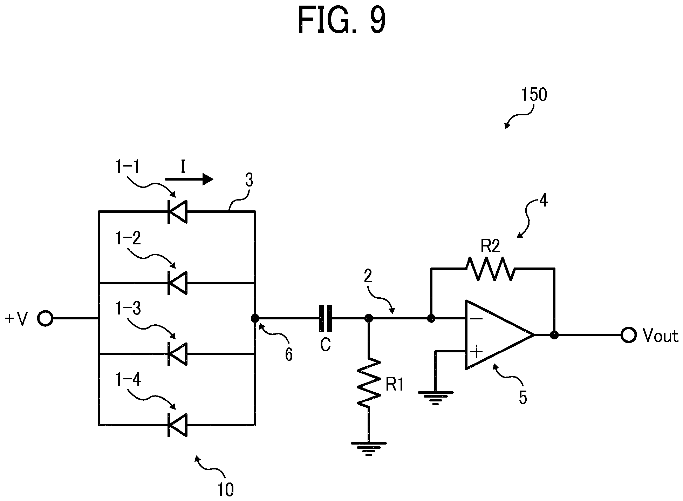

FIG. 9 is a circuit diagram of a pulsed light detection circuit 150 (pulsed light detector) that synthesizes the current signals from the plurality of light receiving elements of the light-receiving element array 10, and outputs the synthesized current signal as a voltage signal.

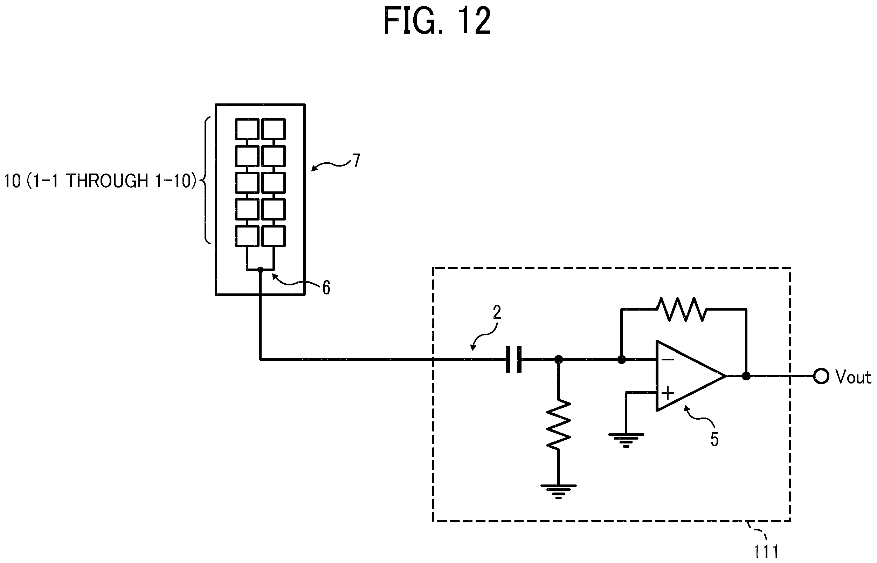

FIG. 12 is an illustration of the pulsed light detection circuit 150 with the light-receiving element array 10 housed in a package 7.

The pulsed light detection circuit 150 of FIG. 9 is substituted for the time measuring PD 42 in the object detector of FIG. 1.

The pulsed light detection circuit 150 includes a light-receiving element array 10, a high-pass filter, and a current-to-voltage converter 4. The light-receiving element array 10 includes four light receiving elements 1 that output signals to be synthesized. The high-pass filter 2 includes a capacitor C and a resistor R1, which are connected downstream from the light-receiving element array 10. The current-to-voltage converter 4 includes an operational amplifier 5 and a resistor R2, which are disposed downstream of the high-pass filter 2.

The operational amplifier 5 of the current-to-voltage converter 4 has a positive input terminal electrically grounded and a negative input terminal connected to both an output terminal of the high-pass filter 4 and one end of the resistor R2. The output terminal of the high-pass filter 4 is connected to the other end of the resistor R2.

The pulsed light detection circuit 150 synthesizes the current signals from the four light receiving elements 1, cutting off the DC component of the synthesized signal by the high-pass filter 2. The pulsed light detection circuit 150 further subjects the resultant current signal to a current-to-voltage conversion, outputting an obtained voltage signal Vout to the PD output detector 44.

That is, the pulsed light detection circuit 150 has a configuration that synthesizes current signals from the plurality of light receiving elements 1, inputting the synthesized current signal into the operational amplifier 5 via the high-pass filter 2, thereby converting the synthesized current signal into a voltage signal. Such a configuration cuts off the DC component of each of the current signals while reducing a random noise component, thereby converting the current signal into a voltage signal. Thus, the pulsed light detection circuit 150 is suitable for detecting pulsed light under the environment with sunlight. Even with sunlight, the pulsed light detection circuit 150 detects a weak pulsed light with a low noise.

In this case, the second PD output detector 44 may not include a signal amplifier to amplify a voltage signal Vout from the pulsed light detection circuit 150. Particularly when the pulsed light detection circuit 150 obtains a sufficient amount of a voltage gain based on the synthesized current signal through the operational amplifier 5, no signal amplifier is disposed in the PD output detector 44.

It is to be noted that the high-pass filter 2 is preferably disposed upstream from the operational amplifier 5. This arrangement prevents the dynamic range of the output signal (voltage signal Vout) from decreasing due to the DC component of the synthesized current signal including the DC component.

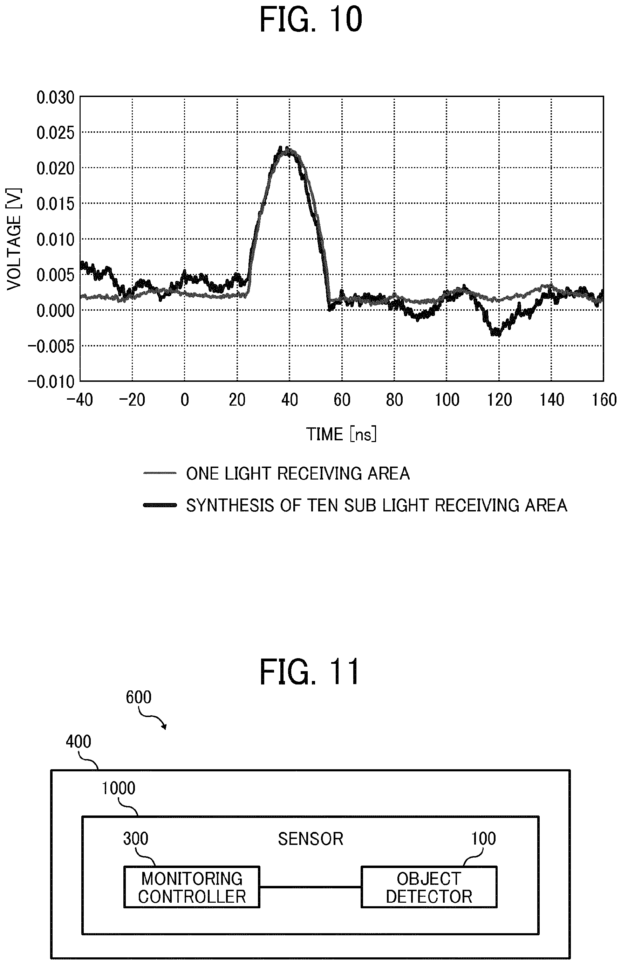

FIG. 10 is a graph of simulation of signals of one large light receiving area and a plurality of sub light receiving areas. In the graph of FIG. 10, with a signal from one large light receiving area (light receiving element 1C) as illustrated in FIG. 8A according to a comparative example, random noise fails to decrease, thus being large relative to the signal. With the light receiving area divided into ten sub light receiving areas (small light receiving elements), random noise has no correlations between the sub light receiving areas, resulting in a successful reduction in noise.

In this case, with the light receiving element 1 downsized, noise due to sunlight decreases while failing to reduce the random noise peculiar to the light receiving element 1.

As such, with one large light receiving element 1 (light receiving area) divided into a plurality of small light receiving elements 1 (sub light receiving areas), current signals from the plurality of light receiving elements 1 are synthesized, reducing random noise due to sunlight, thus improving the S/N ratio. This method is effective when the random noise due to sunlight is sufficiently larger than the random noise peculiar to the light receiving element.

Specifically, such a method is effective when the light receiving element 1 is a current-amplifying light receiving element, such as an avalanche photodiode (APD). The APD amplifies signal light as well as a sunlight component, which is not suitable for outdoor use. However, applying the configuration of the present disclosure to the APD increases the intensity of signal light while reducing noise due to sunlight entering the light-receiving element array, thus forming an array and improving the S/N ratio under the environment with sunlight. This means that the light receiving element of the present disclosure is suitable for outdoor use.

It is to be noted that the APD has two modes: a normal mode for use with a voltage of less than or equal to breakdown voltage and a Geiger mode for use with a voltage of greater than or equal to breakdown voltage. With the Geiger mode, the APD detects whether one photon exists, failing to measure the amount of light. Accordingly, even with signals from the plurality of sub light receiving areas synthesized, the number of photons is merely measured, failing to reduce a detected photon due to sunlight even with an array formed. As a result, the S/N ratio in a received light signal fails to improve.

By contrast, with the normal mode, output current changes in a substantially linear manner relative to the amount of incident light, and sunlight increases a base level (the DC component) of a received-light signal, generating random noise along the base level. Accordingly, signals from the plurality of sub light receiving areas are synthesized, effectively reducing noise.

Preferably, the current signals from the respective light receiving elements 1 of the light-receiving element array 10 are synthesized in the interior of the package 7 with the light-receiving element array 10 enclosed within. Such a configuration reduces the number of signals output from the package 7, allowing the use of a compact package. Further, synthesizing signals in a position as close to the light receiving elements 1 as possible eliminates or reduces the occurrence of noise.

A description is given above of the pulsed light detection circuit 150 to detect a pulsed signal buried in the DC component and random noise. The pulsed light detection circuit 150 may be widely used irrespective of applications. The pulsed light detection circuit 150 is particularly useful for use in the object detector 100 described referring to FIG. 1. The object detector 100 utilizes pulsed light while sunlight generates a DC component and random noise. With the use of the object detector 100 under the environment with sunlight, a signal with a pulse component as signal light buried in the DC component and random noise is obtained. Then, cutting off the DC component and reducing random noise with the method described above allows detection of a smaller pulsed light than the DC component and random noise. Such a configuration allows detecting an object in a further distance, or more reliably detecting an object even in the adverse weather conditions, such as rain.

When distance is measured with a signal buried in noise, variability in distance increases, failing to detect distance. Still with multiple measurement to average or statistically process the results, an object in a further distance is detected, or an object is more reliably detected even in adverse weather conditions, such as rain, as described above.

However, with the use of a scan object detector including a deflector to increase a detection range through multiple measurement, the detection range is shifted for each measurement of distance because the deflector is used for scanning. Accordingly, averaging or statistically processing the values obtained by multiple measurement becomes difficult. Even if the processes of averaging and statistical processing are performed, noise is not effectively reduced.

Therefore, the pulsed light detection circuit 150 is applied to the object detector 100 as a scan object detector, measuring distance with noise effectively reduced, by one measurement (one emission of pulsed light), thus achieving a wide range of measurement by scanning, reducing noise, thereby both increasing detection distance and coping with adverse weather.

With the scan object detector, resolution in a scanning direction easily increases, thereby accurately detecting the size of a target object. A wider range is preferred in a direction perpendicular to the scanning direction. With a wider range in the direction perpendicular to the scanning direction, a target object is reliably detected without the target object out of the detection range even when a vehicle including the object detector 100 shakes up and down (in the direction perpendicular to the scanning direction). To increase resolution in the scanning direction and detect an object over a wide range of detection in a sub-scanning direction, the light receiving element 1 (the shape of the outermost periphery of the light-receiving element array 10) preferably has a shape, in which a second length in the sub-scanning direction (in Z-direction of FIGS. 8A through 8D) is longer than a first length in the main scanning direction (in Y-direction of FIGS. 8A through 8D), as in Example 1 of FIG. 8B.

Regarding the manufacture of a light receiving element 1, particularly the APD, which is difficult to manufacture, manufacturing a circular or square APD is easier. Manufacturing of an APD is more difficult with an increased ratio of the first length in the main scanning direction to the second length in the sub-scanning direction perpendicular to the main scanning direction. Further, in such an APD, the fluctuations in sensitivity or any damage occurs in a plane, or the fluctuations in characteristics between parts occurs. Accordingly, a yield in mass production may decrease.

That is, with a light receiving element 1 of a shape having the second length in the main scanning direction longer than the first length in the sub-scanning direction as described above, a yield in mass production may decrease. As illustrated in FIGS. 8C and 8D according to Examples 2 and 3, respectively, each light receiving element 1 (APD) has a shape, in which there is little or no difference between the first length in the main scanning direction and the second length in the sub-scanning direction. Further, more light elements are arranged in the sub-scanning direction (Z-direction of FIGS. 8A through 8D) perpendicular to the main scanning direction than in the main scanning direction (Y-direction in FIGS. 8A through 8D). Such a configuration facilitates manufacturing of the light receiving element 1 (APD), preventing mass production yield from decreasing.

As provided above of the configuration of the light-receiving element array 10, the light-receiving element array 10 may include a plurality of light receiving elements 1 having output terminals connected to each other, through which output currents are synthesized, to receive (at substantially the same time) pulsed light output from a light source 11.

FIG. 11 is a schematic view of a sensor with the object detector 100. The sensor 1000, which is mounted on a movable body 400, includes the object detector 100 and a monitoring controller 300 electrically connected to the object detector 100. The object detector 100 is mounted in the vicinity of a bumper or a rear-view mirror in a vehicle. The monitoring controller 300, based on the detection results of the object detector 100, estimates the size or shape of an object, and calculates the position and movement data of the object, recognizing the type of the object. The monitoring controller 300 ultimately judges presence of danger. With an affirmative judgment for danger, the monitoring controller 300 issues an alarm (alert) to an operator of the movable body 400, to invite the operator's attention. Alternatively, the monitoring controller 300 issues an order to a steering controller of the movable body 400 to avoid the danger by steering, or issues an order to the ECU to brake the movable body 400. It is to be noted that the sensor 1000 receives power supply from a vehicle battery, for example.

Further, the monitoring controller 300 may be integrated into the object detector 100. Alternatively, in some embodiment, the monitoring controller 300 may be disposed separately from the object detector 100. The monitoring controller 300 performs a part of the control function of the ECU in some embodiments.

The pulsed light detection circuit 150 according to a first Example is a pulsed light detector to detect pulsed light emitted to and reflected from the object. The pulsed light detector includes the light-receiving element array 10 having a plurality of light receiving elements 1 with output terminals connected to each other, to receive pulsed light.

In this case, the current signals from the plurality of light receiving elements 1 having received the pulsed light are superimposed on each other, reducing a noise component while increasing a signal component of the pulsed light, thus improving the accuracy of detection of the pulsed light emitted to and reflected from the object.

Specifically, with sunlight entering the light receiving elements 1, a DC component and random noise (shot noise) generate. The DC component is eliminated by a high-pass filter 2. To eliminate or reduce random noise while securing the intensity of the signal light, the current signals from the light-receiving element array 10 are synthesized. Therefore, even with sunlight, the pulsed light detector detects a weak pulsed light with a low noise.

The configuration with one large light element 1 is compared to the configuration with a plurality of small light receiving elements 1 constituting a light-receiving element array 10 to synthesize the current signals. In the configuration with the plurality of small light receiving elements 1, reduction in the size of the light receiving element 1 reduces the range of detection, thereby reducing both the intensity of signal light and the noise due to sunlight. To prevent a reduction in intensity of signal light, synthesizing the current signals from the plurality of small light receiving elements 1 increases the intensity of signal light while averaging and reducing random noise, thereby improving the S/N ratio in the signal light.

Further, the pulsed light detection circuit 150 (pulsed light detector) further includes a signal processor 111 to, in response to a plurality of current signals separately output from the plurality of light receiving elements 1, extract a signal component of the pulsed light with accuracy.

The signal processor 111 includes a current-to-voltage converter 4 including an operational amplifier 5 and a resistor R2. The current-to-voltage converter 4 converts the synthesized current signal, in which the plurality of current signals are synthesized, into a voltage signal. The signal processor 111 extracts a voltage signal component of the pulsed light from the voltage signal, thus reliably detecting the pulsed light with accuracy.

The signal processor 111 further includes a high-pass filter 2 to eliminate the DC component from the synthesized current signal, thus detecting the pulsed light with more accuracy.

The current-to-voltage converter 4 is connected downstream from the high-pass filter 2, thereby preventing the dynamic range of the output signal (voltage signal Vout) from reducing because of the DC component of the synthesized current signal.

A connecting part 6 of the output terminals 3 of the plurality of light receiving elements 1 and the light-receiving element array 10 are housed in a package 7. The plurality of current signals are synthesized at the connecting part 6, and the synthesized current signal is output to a part of the signal processor 111 disposed outboard of the package 7. Such a configuration reduces the number of signals output from the package 7, allowing a compact package. Further, synthesizing signals in a position as close to the light receiving elements 1 as possible eliminates or reduces the occurrence of noise.

To effectively reduce random noise by synthesizing current signals output from the light-receiving element array 10, there is a need for random noise due to sunlight to be larger than random noise peculiar to the light receiving element 1. In this case, a current-amplifying light receiving element, such as an avalanche photodiode (APD), is suitable for setting random noise due to sunlight to be larger than the random noise peculiar to the light receiving element 1. With the current-amplifying light receiving element, the intensity of signal light increases while random noise due to sunlight decreases with the use of the light-receiving element array, thereby improving the S/N ratio, thus allowing the outdoor use of the pulsed light detection circuit 150.

The current-amplifying light receiving element changes, a current signal output according to the amount of incident light in a substantially linear manner. For example, with the Geiger mode, the APD detects photon of the DC light, failing to reduce random noise even when forming an array and synthesizing the current signals. By contrast, with the normal mode, output current changes in a substantially linear manner relative to the amount of incident light, and sunlight increases a base level (the DC component) of a received light signal, generating random noise along the base level. Accordingly, signals from the plurality of sub light receiving areas are synthesized, effectively reducing noise.

The object detector 100 according to the present embodiment include a LD (light source 11) to emit pulsed light, a projection optical system to project pulsed light from the light source 11, and the pulsed light detection circuit 150 to detect the pulsed light projected from the projection optical system 20 and reflected from the object.

In this case, cutting off the DC component and reducing random noise with the method described above allows detection of a smaller pulsed light. Such a configuration allows detecting an object in a further distance, or more reliably detecting an object even in the adverse weather conditions, such as rain.

The projection optical system 20 further includes a rotating mirror 26 (deflector) to cause pulsed light projected from the LD to scan the effective scan area.

As an alternative method for reducing random noise, there is a method, in which distance to the object is measured plural times, the measured values of distance are averaged, and the averaged value is statistically processed to enhance the detection performance. In the scan object detector, the deflector performs scanning, causing the range of detection to shift for each measurement, resulting in plural measurement, the averaging, and the statistical processing being difficult. Therefore, according to the scan object detector of the present disclosure, a reduction in noise both increases the range of measurement and copes with adverse weather.

The pulsed light detection circuit 150 includes the plurality of light receiving elements 1, of which more light receiving elements 1 are arranged along the sub-scanning direction perpendicular to the main scanning direction (scanning direction) of the rotating mirror 26, than along the main scanning direction.

The scan object detector preferably detects a wide range in the direction (sub-scanning direction) perpendicular to the main scanning, the scan object detector having high resolution in the main scanning direction. To achieve such a configuration, the light receiving element 1 has a shape (the outermost periphery of the light-receiving element array 10), in which a second length in the sub-scanning direction is longer than a first length in the main scanning direction. A light receiving element 1 of a shape having a longer length in one of the main scanning direction and the sub-scanning direction is difficult to be produced, generating the fluctuations in sensitivity and any damage. Accordingly, with more light receiving elements 1 arranged in the sub-scanning direction, the light-receiving element array 10 (for example, the APD) has a shape having a length in the main scanning direction as equal to the other length in the sub-sub-scanning direction as possible, instead of the shape having a longer length in one of the main scanning direction and the sub-scanning direction.

The light source 11, which includes at least one LD, projects pulsed light with a stable output.

The sensor 1000 includes the object detector 100 and the monitoring controller 300 to, in response to the output of the object detector 100, obtain object data (at least one of the presence of an object, the position of the object, the direction of movement of the object, and the speed of movement of the object). The sensor 1000 reliably obtains the object data.

The sensor 1000 is mounted on the movable body 400. The monitoring controller 300, based on at least one of the position data and the movement data of the object, judges the presence of danger, thereby providing effective data for avoiding danger to an operational control system and a speed control system of a movable body 400, for example.

Further, a movable device 600 including the sensor 1000 and the movable body 400 including the sensor 1000 has excellent safety against impact.

The method for detecting pulsed light emitted to and reflected from the object according to the present embodiment includes receiving light at a plurality of light receiving element1 having output terminals 3 connected to each other.

In this case, the current signals from the plurality of light receiving elements 1 having received the pulsed light are superimposed on each other, reducing a noise component while increasing a signal component of the pulsed light, resulting in improvement of accuracy of detection for pulsed light emitted to and reflected from the object.

The method for detecting pulsed light according to the present embodiment further includes extracting a signal component of the pulsed light in response to a plurality of current signals output from the plurality of light receiving elements 1, individually, thereby accurately extracting the signal component.

The step for extraction of the signal component includes converting a synthesized current signal, in which the plurality of current signals are synthesized, into a voltage signal, extracting a voltage signal component of pulsed light from the voltage signal. With this sub step for extraction, the pulsed light is reliably detected with accuracy.

The step for extraction of the signal component further includes eliminating a DC component from the synthesized current signal or a current signal, thereby detecting the pulsed light with more accuracy.

The sub step for elimination of the DC component from the synthesized current signal prevents a reduction in dynamic range of the output signal (voltage signal Vout) due to the presence of the DC component in the current signal. This is because the sub step for elimination is performed before the sub step for extraction of voltage signal component from the voltage signal.

The pulsed light detection circuit 150 according to a second Example is a pulsed light detector to detect pulsed light emitted to and reflected from the object. The pulsed light detector includes the light-receiving element array 10 having a plurality of light receiving elements 1, each to receive pulsed light, and a current synthesis device to synthesize a plurality of current signals respectively output from the plurality of light receiving elements 1.

In this case, the current signals from the plurality of light receiving elements having received the pulsed light are superimposed on each other, reducing a noise component while increasing a signal component of the pulsed light. According to the present disclosure, it is an object to improve the accuracy of detection of pulsed light projected onto and reflected from an object, thus improving the accuracy of detection of the pulsed light emitted to and reflected from the object.

It is to be noted that the configuration of the object detector according to the present embodiment may be modified as appropriate.

According to the present embodiment, a sing LD is used for the light source 11. However, the present disclosure is not limited to this configuration. Examples of the light source 11 include a laser diode (LD) array, in which a plurality of laser diodes are unidimensionally or two-dimensionally arranged, a Vertical Cavity Surface Emitting Laser (VCSEL), the VCSEL array, in which the VCSEL is unidimensionally or two-dimensionally arranged, lasers other than a semiconductor laser, and a light source other than lasers. Examples of the LD array, in which a plurality of laser diodes are unidimensionally arranges include a stack LD array, in which a plurality of laser diodes are stacked, and another type of LD array, in which a plurality of laser diodes are horizontally arranged. As the semiconductor laser, the VCSEL is substituted for the LD, thereby including more luminous points within the array.

According to the present embodiment, one high-pass filter 2 is disposed on a signal path of the synthesized current signal of the current signals of the plurality of light emitting elements 1. Alternatively, in some embodiment, a high-pass filter 2 is disposed on the output terminal 3 of each light receiving element 1. That is, after the DC components are eliminated from the current signals of the respective light receiving elements 1, the current signals without the DC components may be synthesized.

Further, the type, the number, the shape, the size, and arrangement of the light receiving element 1 in the light-receiving element array 10 described above may be modified as appropriate.

Further, the pulsed light detection circuit 150 may not include at least one of the high-pass filter 2 and the current-to-voltage converter 4. That is, the pulsed light detection circuit 150 includes only a light-receiving element array 10. Alternatively, the pulsed light detection circuit 150 includes a light-receiving element array 10 and a high-pass filter 2. Alternatively, the pulsed light detection circuit 150 includes a light-receiving element array 10 and a current-to-voltage converter 4.

The projection optical system 20 may not include the coupling lens 22. Alternatively, the projection optical system 20 may include another type of lens.

The projection optical system 20 and the light receiving optical system 30 may not include the reflection mirror 24. That is, light emitted from the LD enters the rotating mirror 26 without the folded optical path.

The light receiving optical system 30 may not include a light receiving lens. Alternatively, the light receiving optical system 30 may include another type of optical element, such as a collecting lens.

Instead of the rotating mirror 26 as the deflector, other types of mirrors, such as a polygon mirror (rotating polygon mirror), a galvano mirror, and a micro electro mechanical system (MEMS) mirror, are applicable.

The synchronous system 50 may not include the synchronization lens 52. Alternatively, the synchronous system 50 may include another type of optical element, such as a collecting lens.

According to the present embodiment, a vehicle is taken as an example for the movable body 400, on which the object detector 100 is mounted. Examples of the movable body 400 include a vehicle other than an automobile, an airplane, and a vessel.

Further, specific numerical values and shapes taken for the above description are illustrative only, and can be modified as appropriate without exceeding beyond the scope of the present disclosure.

As is apparent from the above-description, the pulsed light detection circuit 150, the object detector 100, the sensor 1000, the movable device 600, and the method for detecting pulsed light according to the present embodiment of this disclosure is the technology that measures the distance to an object, utilizing the Time of Flight (TOF) method. Such a technology is widely used in the industries of the motion-capture technology, the range instruments, and the three-dimensional shape measurement technology, in addition to sensing a movable body 400. Therefore, the pulsed light detector and the object detector 100 of the present disclosure may not be mounted on a movable body 400.

Hereinafter, a description is provided of process of thinking, in which the inventor has conceived of the embodiments described above.

There is a laser radar as an in-vehicle device to detect the presence of an object forward a vehicle and the distance to the object. There are various optical systems for laser radar. As disclosed in Japanese Laid-Open Patent Application No. 2011-128112, Japanese Laid-Open Patent Application No. 2009-063339, Japanese Laid-Open Patent Application No. 2012-107984, and Japanese Laid-Open Patent Application No. 2009-069003, in an optical system, a light source 11 emits a laser beam, scanning with a rotating mirror. Then, an optical detector detects the light reflected or scattered on an object via the rotating mirror again, thereby detecting the presence of the object within a desired range and the distance to the object. Such a scanning laser radar to scan both a projection range of projection and a detectable range of a detector collects a laser beam on only a portion to be detected, which is advantageous from the viewpoints of the accuracy of detection, the detection of distance, and cost for the detector because the detectable range of the detector is minimized.

The laser radar described above applies the TOF method to measure the distance to an object, the TOF method in which a length of time is measured from when emitting pulsed light ranging from several ns through several dozen ns to an object and to when receiving the light having returned, thereby obtaining the distance to the object.

With the laser radar used outdoors, noise due to sunlight generates. Sunlight is a DC light. With sunlight entering a light receiving system of the laser radar, a DC level changes while generating random noise (shot noise). The use of a high-pass filter 2 prevents changes in the DC level due to the DC light component, failing to cut shot noise. With stronger sunlight in, shot noise increases, and detection is thereby difficult under the environment particularly with afternoon sunlight.

Examples of the method for reducing random noise (shot noise) includes a method, in which a pulse waveform is subjected to the A/D conversion, using a fast Fourier transform, as disclosed in Japanese Laid-Open Patent Application No. 1998-197620. This method has difficulties in processing speed. As disclosed in Japanese Laid-Open Patent Application No. 1998-197620, there is a method for reducing random noise, using a delayed signal in a delay circuit. In this method, a delay time is approximately 1 us to measure a distance of 200 m, which means the delay time is extremely long. To achieve such a delay circuit, the size of the circuit increases while reducing the accuracy of the delay circuit due to changes in temperature because the delay circuit is typically vulnerable to changes in temperature.

Therefore, the inventor has found the above-described embodiments to cope with such circumstances.

## Claims

1. An object detector (100) comprising:
a light source (11) to emit pulsed light;
an optical system (20) to project the pulsed light emitted from the light source, wherein the optical system (20) includes a deflector (26) to cause the pulsed light emitted from the light source (11) to perform scanning; and
a pulsed light detector (150) to detect the pulsed light projected from the optical system (20) and reflected from the object, the pulsed light detector (150) comprising a light-receiving element array (10) including a plurality of light receiving elements (1) with output terminals (3) connected to each other to receive the pulsed light,
wherein among the plurality of light receiving elements (1) of the pulsed light detector (150), more light receiving elements (1) are disposed along a direction perpendicular to a scanning direction of the deflector (26) than along the scanning direction,
**characterised in that**:
each of the light receiving elements (1) is a current-amplifying light receiving element to amplify electric current, wherein the current-amplifying light receiving element changes a current signal output according to an amount of incident light in a substantially linear manner.

2. The object detector (100) according to claim 1, the pulsed light detector (150) further comprising a signal processor (111) to extract a signal component of the pulsed light in response to a plurality of current signals separately output from the plurality of light receiving elements (1).

3. The object detector (100) according to claim 2,
wherein the signal processor (111) includes a current-to-voltage converter (4) to convert a synthesized current signal of the plurality of current signals into a voltage signal, and
wherein the signal processor (111) extracts a voltage signal component of the pulsed light from the voltage signal.

4. The object detector (100) according to claim 3,
wherein the signal processor (111) includes a high-pass filter (2) to eliminate a direct current component from the plurality of current signals or the synthesized current signal.

5. The object detector (100) according to claim 4,
wherein the current-to-voltage converter (4) is connected downstream of the high-pass filter (2).

6. The object detector (100) according to any one of claims 3 through 5,
wherein the light-receiving element array (10) and a connecting part (6) of the output terminals (3) of the plurality of light receiving elements (1) are housed in a package (7),
wherein the plurality of current signals are synthesized into the synthesized current signal at the connecting part (6), and
wherein the synthesized current signal is output from the connecting part (6) to an outside of the package (7).

7. A sensor (1000) comprising:
the object detector (100) according to any one of claims 1 through 6; and
a monitoring controller (300) to, in response to an output of the object detector (150), obtain object data including at least one of presence of an object, a direction of movement of the object, and a speed of movement of the object.

8. A movable device (600) comprising:
a movable body (400); and
the sensor (1000) according to claim 7 mounted on the movable body (400).

9. A method for detecting pulsed light projected onto and reflected from an object, the method comprising:
emitting pulsed light from a light source (11);
projecting the pulsed light emitted from the light source (11) using an optical system (20) that includes a deflector (26) that causes the pulsed light emitted from the light source (11) to perform scanning;
receiving the pulsed light at a plurality of light receiving elements (1) with output terminals (3) connected to each other; and
extracting a signal component of the pulsed light in response to a plurality of current signals separately output from the plurality of light receiving elements (1),
wherein among the plurality of light receiving elements (1) of the pulsed light detector (150), more light receiving elements (1) are disposed along a direction perpendicular to a scanning direction of the deflector (26) than along the scanning direction,
**characterised in that**:
each of the light receiving elements (1) is a current-amplifying light receiving element to amplify electric current, wherein the current-amplifying light receiving element changes a current signal output according to an amount of incident light in a substantially linear manner.

10. The method according to claim 9,
wherein the extracting the signal component includes:
converting a synthesized current signal of the plurality of current signals into a voltage signal; and
extracting a voltage signal component of the pulsed light from the voltage signal.

11. The method according to claim 10,
wherein the extracting the signal component further includes eliminating a direct current component from the synthesized current signal or the current signals before the extracting the voltage signal component.

## Patentansprüche

1. Objektdetektor (100), umfassend:
eine Lichtquelle (11), um gepulstes Licht zu emittieren;
ein optisches System (20), um das gepulste Licht, das von der Lichtquelle emittiert wird, zu projizieren, wobei das optische System (20) einen Deflektor (26) enthält, um zu bewirken, dass das gepulste Licht, das von der Lichtquelle (11) emittiert wird, ein Abtasten ausführt; und
einen Detektor für gepulstes Licht (150), um das gepulste Licht, das von dem optischen System (20) projiziert wird und von dem Objekt reflektiert wird, zu erfassen, wobei der Detektor für gepulstes Licht (150) eine Lichtempfangselementanordnung (10) umfasst, die eine Vielzahl von Lichtempfangselementen (1) mit Ausgangsanschlüssen (3), die miteinander verbunden sind, enthält, um das gepulste Licht zu empfangen,
wobei unter der Vielzahl von Lichtempfangselementen (1) des Detektors für gepulstes Licht (150) mehr Lichtempfangselemente (1) entlang einer Richtung, die senkrecht zu einer Abtastrichtung des Deflektors (26) ist, angeordnet sind als entlang der Abtastrichtung,
**dadurch gekennzeichnet, dass**:
jedes der Lichtempfangselemente (1) ein stromverstärkendes Lichtempfangselement ist, um elektrischen Strom zu verstärken, wobei das stromverstärkende Lichtempfangselement ein ausgegebenes Stromsignal gemäß einer Menge an einfallendem Licht im Wesentlichen linear verändert.

2. Objektdetektor (100) nach Anspruch 1, wobei der Detektor für gepulstes Licht (150) ferner einen Signalprozessor (111) umfasst, um eine Signalkomponente des gepulsten Lichts als Reaktion auf eine Vielzahl von Stromsignalen, die getrennt von der Vielzahl von Lichtempfangselementen (1) ausgegeben werden, zu extrahieren.

3. Objektdetektor (100) nach Anspruch 2,
wobei der Signalprozessor (111) einen Strom-Spannungswandler (4) enthält, um ein synthetisiertes Stromsignal der Vielzahl von Stromsignalen in ein Spannungssignal umzuwandeln, und
wobei der Signalprozessor (111) eine Spannungssignalkomponente des gepulsten Lichts von dem Spannungssignal extrahiert.

4. Objektdetektor (100) nach Anspruch 3,
wobei der Signalprozessor (111) einen Hochpassfilter (2) enthält, um eine Gleichstromkomponente aus der Vielzahl von Stromsignalen oder dem synthetisierten Stromsignal zu eliminieren.

5. Objektdetektor (100) nach Anspruch 4,
wobei der Strom-Spannungswandler (4) stromabwärts des Hochpassfilters (2) verbunden ist.

6. Objektdetektor (100) nach einem der Ansprüche 3 bis 5,
wobei die Lichtempfangselementanordnung (10) und ein Verbindungsteil (6) der Ausgangsanschlüsse (3) der Vielzahl von Lichtempfangselementen (1) in einem Paket (7) aufgenommen sind,
wobei die Vielzahl von Stromsignalen in das synthetisierte Stromsignal an dem Verbindungsteil (6) synthetisiert sind und
wobei das synthetisierte Stromsignal von dem Verbindungsteil (6) zu einer Außenseite des Pakets (7) ausgegeben wird.

7. Sensor (1000), umfassend:
den Objektdetektor (100) nach einem der Ansprüche 1 bis 6; und
eine Überwachungssteuerung (300), um als Reaktion auf eine Ausgabe des Objektdetektors (150) Objektdaten, die mindestens eines von einer Anwesenheit eines Objekts, einer Bewegungsrichtung des Objekts und einer Bewegungsgeschwindigkeit des Objekts enthalten, zu erlangen.

8. Bewegliche Vorrichtung (600), umfassend:
einen beweglichen Körper (400); und
den Sensor (1000) nach Anspruch 7, der an dem beweglichen Körper (400) befestigt ist.

9. Verfahren zum Erfassen von gepulstem Licht, das auf ein Objekt projiziert wird und davon reflektiert wird, wobei das Verfahren Folgendes umfasst:
Emittieren von gepulstem Licht von einer Lichtquelle (11);
Projizieren des gepulsten Lichts, das von der Lichtquelle (11) emittiert wird, unter Verwendung eines optischen Systems (20), das einen Deflektor (26) enthält, der bewirkt, dass das gepulste Licht, das von der Lichtquelle (11) emittiert wird, ein Abtasten ausführt;
Empfangen des gepulsten Lichts an einer Vielzahl von Lichtempfangselementen (1) mit Ausgangsanschlüssen (3), die miteinander verbunden sind; und
Extrahieren einer Signalkomponente des gepulsten Lichts als Reaktion auf eine Vielzahl von Stromsignalen, die getrennt von der Vielzahl von Lichtempfangselementen (1) ausgegeben werden,
wobei unter der Vielzahl von Lichtempfangselementen (1) des Detektors für gepulstes Licht (150) mehr Lichtempfangselemente (1) entlang einer Richtung, die senkrecht zu einer Abtastrichtung des Deflektors (26) ist, angeordnet sind als entlang der Abtastrichtung,
**dadurch gekennzeichnet, dass**:
jedes der Lichtempfangselemente (1) ein stromverstärkendes Lichtempfangselement ist, um elektrischen Strom zu verstärken, wobei das stromverstärkende Lichtempfangselement ein ausgegebenes Stromsignal gemäß einer Menge an einfallendem Licht im Wesentlichen linear verändert.

10. Verfahren nach Anspruch 9,
wobei das Extrahieren der Signalkomponente Folgendes enthält:
Umwandeln eines synthetisierten Stromsignals der Vielzahl von Stromsignalen in ein Spannungssignal; und
Extrahieren einer Spannungssignalkomponente des gepulsten Lichts aus dem Spannungssignal.

11. Verfahren nach Anspruch 10,
wobei das Extrahieren der Signalkomponente ferner ein Eliminieren einer Gleichstromkomponente aus dem synthetisierten Stromsignal oder den Stromsignalen vor dem Extrahieren der Spannungssignalkomponente enthält.

## Revendications

1. Détecteur d'objet (100) comprenant :
une source lumineuse (11) pour émettre une lumière puisée ;
un système optique (20) pour projeter la lumière pulsée émise depuis la source lumineuse, le système optique (20) comprenant un déflecteur (26) pour amener la lumière pulsée émise depuis la source lumineuse (11) à effectuer un balayage ; et
un détecteur de lumière pulsée (150) pour détecter la lumière pulsée projetée depuis le système optique (20) et réfléchie depuis l'objet, le détecteur de lumière pulsée (150) comprenant un réseau d'éléments récepteurs de lumière (10) comprenant une pluralité d'éléments récepteurs de lumière (1) avec des bornes de sortie (3) connectées les unes aux autres pour recevoir la lumière pulsée,
parmi la pluralité d'éléments récepteurs de lumière (1) du détecteur de lumière pulsée (150), plus d'éléments récepteurs de lumière (1) étant disposés dans une direction perpendiculaire à une direction de balayage du déflecteur (26) que dans la direction de balayage,
**caractérisé en ce que** :
chacun des éléments récepteurs de lumière (1) est un élément récepteur de lumière amplificateur de courant pour amplifier le courant électrique, l'élément récepteur de lumière amplificateur de courant change un signal de courant émis en fonction d'une quantité de lumière incidente de manière sensiblement linéaire.

2. Détecteur d'objet (100) selon la revendication 1, le détecteur de lumière pulsée (150) comprenant en outre un processeur de signal (111) pour extraire une composante de signal de la lumière pulsée en réponse à une pluralité de signaux de courant émis séparément depuis la pluralité d'éléments récepteurs de lumière (1).

3. Détecteur d'objet (100) selon la revendication 2,
dans lequel le processeur de signal (111) comprend un convertisseur courant-tension (4) pour convertir un signal de courant synthétisé de la pluralité de signaux de courant en signal de tension, et
dans lequel le processeur de signal (111) extrait du signal de tension une composante de signal de tension de la lumière pulsée.

4. Détecteur d'objet (100) selon la revendication 3,
dans lequel le processeur de signal (111) comprend un filtre passe-haut (2) pour éliminer une composante de courant direct de la pluralité de signaux de courant ou du signal de courant synthétisé.

5. Détecteur d'objet (100) selon la revendication 4,
dans lequel le convertisseur courant-tension (4) est connecté en aval du filtre passe-haut (2).

6. Détecteur d'objet (100) selon l'une quelconque des revendications 3 à 5,
dans lequel le réseau d'éléments récepteurs de lumière (10) et une partie de connexion (6) des bornes de sortie (3) de la pluralité d'éléments récepteurs de lumière (1) sont logés dans un paquet (7),
dans lequel la pluralité de signaux de courant sont synthétisés en signal de courant synthétisé au niveau de la partie de connexion (6), et
dans lequel le signal de courant synthétisé est émis depuis la partie de connexion (6) vers l'extérieur du paquet (7).

7. Capteur (1000) comprenant :
le détecteur d'objet (100) selon l'une quelconque des revendications 1 à 6 ; et
un dispositif de commande de surveillance (300) pour, en réponse à une sortie du détecteur d'objet (150), obtenir des données d'objet comprenant la présence d'un objet, une direction de mouvement de l'objet et/ou une vitesse de mouvement de l'objet.

8. Dispositif mobile (600) comprenant :
un corps mobile (400) ; et
le capteur (1000) selon la revendication 7 monté sur le corps mobile (400).

9. Procédé de détection d'une lumière pulsée projetée sur un objet et réfléchie depuis celui-ci, le procédé comprenant :
l'émission de lumière pulsée depuis une source lumineuse (11) ;
la projection de la lumière pulsée émise depuis la source lumineuse (11) à l'aide d'un système optique (20) qui comprend un déflecteur (26) qui amène la lumière pulsée émise depuis la source lumineuse (11) à effectuer un balayage ;
la réception de la lumière pulsée au niveau d'une pluralité d'éléments récepteurs de lumière (1) avec des bornes de sortie (3) connectées les unes aux autres ; et
l'extraction d'une composante de signal de la lumière pulsée en réponse à une pluralité de signaux de courant émis séparément de la pluralité d'éléments récepteurs de lumière (1),
parmi la pluralité d'éléments récepteurs de lumière (1) du détecteur de lumière pulsée (150), plus d'éléments récepteurs de lumière (1) étant disposés dans une direction perpendiculaire à une direction de balayage du déflecteur (26) que dans la direction de balayage,
**caractérisé en ce que** :
chacun des éléments récepteurs de lumière (1) est un élément récepteur de lumière amplificateur de courant pour amplifier un courant électrique, l'élément récepteur de lumière amplificateur de courant changeant un signal de courant émis en fonction d'une quantité de lumière incidente de manière sensiblement linéaire.

10. Procédé selon la revendication 9,
dans lequel l'extraction de la composante de signal comprend :
la conversion d'un signal de courant synthétisé de la pluralité de signaux de courant en signal de tension ; et
l'extraction d'une composante de signal de tension de la lumière pulsée du signal de tension.

11. Procédé selon la revendication 10,
dans lequel l'extraction de la composante de signal comprend en outre l'élimination d'une composante de courant direct du signal de courant synthétisé ou des signaux de courant avant l'extraction de la composante de signal de tension.
